# EUROPÄISCHE PATENTSCHRIFT

(11) **EP 1 958 494 B1**
(45) Veröffentlichungstag und Bekanntmachung des Hinweises auf die Patenterteilung: **11.05.2011**
(21) Anmeldenummer: 08002826.9
(22) Anmeldetag: 15.02.2008
(51) Int. Cl.: A01D 45/00

(54) **Verfahren zum Ernten von Spargel**
Process for harvesting asparagus
Procédé pour récolter des asperges

(30) Priorität: 16.02.2007 DE 102007008330
(43) Veröffentlichungstag der Anmeldung: 20.08.2008
(73) Patentinhaber: Neubauer, Hermann, 59514 Welver (DE); Neubauer, Christoph, 59514 Welver (DE)
(72) Erfinder: Neubauer, Christoph, 59514 Welver (DE); Neubauer, Hermann, 59514 Welver (DE)
(74) Vertreter: Basfeld, Rainer

(56) Entgegenhaltungen:
- EP-A- 0 053 994
- EP-A- 1 258 186
- DE-U1-202004 009 929
- US-A1- 2005 016 152

## Beschreibung

Die vorliegende Erfindung betrifft ein Verfahren zum Ernten von Spargel gemäß dem Oberbegriff des Anspruchs 1.

Ein Verfahren der vorgenannten Art ist aus der US 200510016152 A1 bekannt. Diese Schrift beschreibt ein Fahrzeug mit Laser-Sensoren, die erkennen können, ob eine Spargelstange mehr als eine Mindesthöhe aufweist und somit erntereif ist. Zusätzliche Sensoren können die ungefähre horizontale Position der Spargelstange erfassen. Weiterhin umfasst das Fahrzeug eine Ernteeinheit, die zusätzliche Sensormittel zur genauen Positionierung über der als reif erkannten Spargelstange umfasst. Während des Erfassens und Aberntens der Spargelstange durch die Ernteeinheit bewegt sich die Ernteeinheit derart relativ zu dem Fahrzeug, dass einerseits das Fahrzeug weiter fährt und andererseits die Ernteeinheit relativ zu der Spargelstange vergleichsweise ortsfest ist.

Ein weiteres Verfahren zum Ernten von Spargel ist aus der DE 20 2004 009 929 U1 bekannt. Der darin beschriebene Spargelernter weist ein Fahrzeug auf, an dem über eine dreiachsige Verfahreinheit eine Spargelstecheinheit angebracht ist. Der Spargelernter kann vermittels einer Kamera die Position einer zu erntenden Spargelstange erfassen. Nach dem Erfassen einer erntereifen Spargelstange stoppt das Fahrzeug und die Verstelleinheit bewegt die Spargelstecheinheit an die erfasste Position. Das Abstoppen des Fahrzeugs erweist sich als notwendig, weil die Kamera während des Aberntens die Erntestelle beobachten muss. Nach dem Abernten der Spargelstange setzt sich das Fahrzeug wieder in Bewegung. Dieses Verfahren erweist sich als sehr aufwendig, weil insbesondere bei massereichen Fahrzeugen das Abstoppen und das sich daran anschließende Anfahren sehr energie- und zeitaufwendig ist.

Aus der EP 0 428 284 B2 sind eine Vorrichtung und ein Verfahren zum Ernten von Pilzen aus Pilzkulturen bekannt. Dabei wird eine Schale mit einem Pilzkulturbeet auf einem Förderband verfahren, das von einer Zeilenkamera beobachtet wird. Die Auswertung der Bilddaten der Zeilenkamera erlaubt die Erkennung erntereifer Pilze. Die Steuereinheit des Förderbandes gibt Daten über die Position in Bewegungsrichtung des Bandes an eine Entnahmeeinheit weiter. Die Positionsdaten reifer Pilze in der Richtung senkrecht zur Bandlängsrichtung werden von der Zeilenkamera an die Entnahmeeinheit weitergegeben. Auf diese Weise wird die Entnahmeeinheit in die Lage versetzt, die Position der reifen Pilze anzufahren und diese zu entnehmen. Eine Übertragung einer derartigen Technik auf die Ernte von Spargelstangen auf einem Spargelfeld ist aufgrund der Unebenheiten typischer Spargelfelder nicht möglich, weil beispielsweise die Daten der Motorsteuerung keinen genauen Aufschluss über die tatsächliche Fahrstrecke geben können. Die tatsächliche Fahrstrecke wird vielmehr wesentlich durch unvorhergesehene Kurven und dergleichen bestimmt, die die Räder des Fahrzeugs aufgrund größerer Bodenunebenheiten fahren.

Das der vorliegenden Erfindung zugrunde liegende Problem ist die Schaffung eines Verfahrens der eingangs genannten Art, das effektiver ist.

Dies wird erfindungsgemäß durch ein Verfahren der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die Steuermittel aus von den Mitteln zum Erkennen ermittelten Daten die Geometrie oder Topologie des Bodens berechnen und so auch die Entnahmemittel gezielt zu der Position der zu erntenden Spargelstange führen können.

Insbesondere kann vorgesehen sein, dass die Mittel zum Erkennen einer einzelnen Spargelstange die zu erntende Spargelstange nicht erfassen oder nicht erfassen müssen, während diese entnommen wird. Vielmehr berechnen die Steuermittel aus den von den Mitteln zum Erkennen ermittelten Daten die Geometrie oder Topologie des Bodens und führen so auch die Entnahmemittel gezielt zu der Position der zu erntenden Spargelstange. Damit können die beispielsweise als Kameras ausgeführten Mitteln zum Erkennen während des Erntevorgangs bereits einen Bereich beobachten, der vor dem Ernteort liegt, während das Fahrzeug kontinuierlich weiter fährt.

Vorzugsweise werden dabei die Positionsdaten, die der Führung der Entnahmemittel dienen, nicht aus der Motoransteuerung generiert, sondern ausschließlich durch die Auswertung der Bilddaten der Kameras erzeugt. Alternativ können zusätzlich die Daten der Motorsteuerung zur Überprüfung der Plausibilität der ermittelten Positionsdaten hinzugezogen werden. Die Positionsdaten werden insbesondere deshalb aus den Bilddaten ermittelt, weil bei einem unebenen Boden, wie er auf einem Spargelfeld üblich ist, die Vorwärtsbewegung der Motoren nicht immer auch einen Aufschluss über die tatsächliche Bewegung des Fahrzeugs gibt. Weiterhin lässt sich den ausgewerteten Bilddaten auch eine Höheninformation der abzuerntenden Spargelstangen entnehmen, weil der Vergleich in zeitlicher Abfolge aufgenommener Bilder eine perspektivische Ansicht einer Spargelstange ermöglicht. Da auf diese Weise die Höhe des aus der Erde herausragenden Anteils der Spargelstange bestimmt werden kann, kann auch die Stechtiefe der Entnahmemittel bei jeder einzelnen Spargelstange vorgegeben werden.

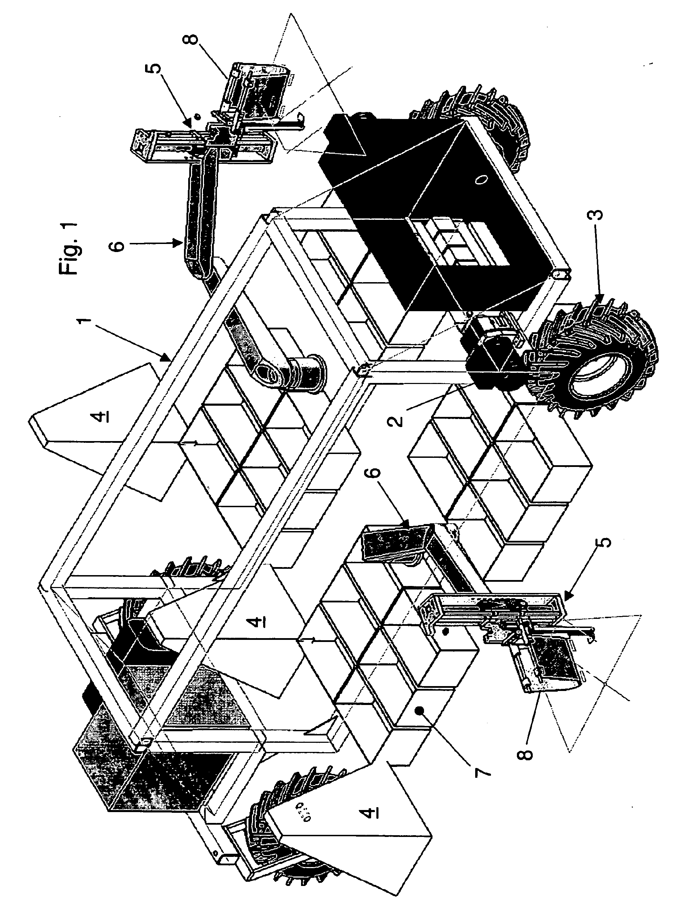

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen, Darin zeigt
- Fig. 1: eine perspektivische Ansicht einer Vorrichtung zur Durchführung des erfindungsgemäßen Verfahrens.

Die abgebildete Vorrichtung umfasst ein Fahrzeug 1, das mittels eines oder mehrerer Motoren 2 über ein Spargelfeld bewegt werden kann. Das Fahrzeug 1 kann so über ein Spargelfeld fahren, dass jeweils zwei hintereinander angeordnete Räder 3 in einer Furche zwischen zwei Reihen von Spargelpflanzen bewegt werden. Dadurch kann die Vorrichtung gleichzeitig Spargelstangen in drei nebeneinander liegenden Reihen von Spargelpflanzen abernten.

Die Vorrichtung umfasst weiterhin drei Kameras 4, die nebeneinander und beabstandet zueinander im vorderen Bereich des Fahrzeugs 1 angeordnet sind. Bei bestimmungsgemäßem Gebrauch kann jede der Kameras 4 über einer Reihe von Spargelpflanzen angeordnet sein. Die Kameras 4 sind mit nicht abgebildeten Steuerungsmitteln verbunden.

Die Vorrichtung umfasst weiterhin zwei Entnahmemittel 5 zum Entnehmen einzelner Spargelstangen aus dem Boden. Die Entnahmemittel 5 sind über zwei horizontale Gelenkarmroboter (SCARA) 6 mit dem Fahrzeug 1 verbunden. Abgeerntete Spargelstangen können in an dem Fahrzeug 1 angeordneten Aufnahmebehältern 7 abgelegt werden. Die Entnahmemittel 5 und die Gelenkarmroboter 6 werden von den Steuerungsmitteln angesteuert.

Diese zwei Gelenkarmroboter 6 mit den daran angebrachten Entnahmemitteln 5 sind für das Abernten in drei Reihen von Spargelpflanzen zuständig. Jeweils die beiden äußeren Reihen der drei Reihen werden nur von einem Gelenkarmrobotern 6 mit den entsprechenden Entnahmemitteln 5 abgeerntet, wohingegen die mittlere Reihe von beiden Gelenkarmrobotern 6 mit den entsprechenden Entnahmemitteln 5 abgeerntet wird. Dabei entscheiden die Steuerungsmittel je nach Dichte der abzuerntenden Spargelstangen auf den äußeren Reihen, welcher der Roboter gerade genug Zeit hat, eine Stange auf der mittleren Reihe zu ernten.

Es sind weiterhin im Bereich der Entnahmenmittel 5 tragbare Aufnahmen 8 angeordnet, in denen die abgeernteten Spargelstangen zwischengelagert werden können, bis die Steuerungsmittel entscheiden, dass aufgrund geringerer Dichte erntereifer Spargelstangen genügend Zeit vorhanden ist, die zwischengelagerten Stangen in den Aufnahmebehältern 7 abzulegen.

Für den Fall, dass Sortiermittel für eine Vorsortierung vorgesehen sind, kann die Aufnahme in mehrere Fächer unterteilt sein, um eine vorsortierte Zwischenspeicherung zu ermöglichen.

Im Erntebetrieb fährt das Fahrzeug 1 nach links in Fig. 1. Die drei Kameras 4 übertragen Bildinformationen der drei Reihen von Spargelpflanzen an die Steuermittel. Dies kann mit einer vergleichsweise hohen Auflösung geschehen, so dass aus den Bilddaten mit vergleichsweise großer Genauigkeit die Geometrie beziehungsweise Topologie des Bodens im Bereich der drei Reihen ermittelt werden kann. Weiterhin lässt sich aus den Bilddaten auch die Geschwindigkeit und Fahrrichtung des Fahrzeugs 1 ermitteln. Zusätzlich kann auch anhand der Bilddaten entschieden werden, ob eine auf einer der drei Reihen entdeckte Spargelstange erntereif ist. Dies kann insbesondere durch Ermittlung der Höhe des aus dem Boden ragenden Teils einer Spargelstange geschehen. Entsprechend dieser Höhe kann dann die Stechtiefe der Entnahmemittel 5 durch die Steuermittel vorgegeben werden, so dass Spargelstangen einer vorgegebenen Länge wie beispielsweise 24 cm abgeschnitten werden.

Die Fahrtrichtung kann aus den erfassten Daten an die Richtung der Reihen angepasst werden. Dies kann jedoch auch durch Anlage mechanischer Führungsmittel wie Rollen an den Seiten der dammähnlichen Reihen gewährleistet werden.

Aus den erfassten Daten wird die genaue Position einer erntereifen Spargelstange relativ zum Fahrzeug 1 ermittelt. Beispielsweise kann die Ermittlung ausschließlich auf Basis der erfassten Bilddaten ohne zusätzliche Informationen wie Daten der Motorsteuerung oder dergleichen geschehen. Allerdings können die Daten der Motorsteuerung hinzugezogen werden, um Plausibilitätsüberlegungen anzustellen. Während sich das Fahrzeug 1 weiter nach links in Fig. 1 bewegt und die Kameras 4 bereits die als erntereif erkannte Spargelstange nicht mehr beobachten, fährt der Gelenkarmroboter 6 die Entnahmemittel 5 zu der berechneten Position der erntereifen Spargelstange und hält durch Verdrehen seiner Gelenke die Entnahmemittel 5 während der kontinuierlichen Vorwärtsbewegung des Fahrzeugs 1 solange in dieser Position, bis die Entnahme der entsprechenden Spargelstange abgeschlossen ist. Danach wird die Spargelstange in einem Aufnahmebehälter 7 oder in einer der tragbaren Aufnahmen 8 abgelegt. Daran anschließend kann der Gelenkarmroboter 6 die Entnahmemittel 5 zu der berechneten Position der nächsten erntereifen Spargelstange bewegen.

Wenn eine große Menge erntereifer Spargelstangen erfasst wird, wird die Geschwindigkeit des Fahrzeuges 1 verlangsamt, um den Gelenkarmrobotern 6 beziehungsweise den Entnahmemitteln 5 genügend Zeit für das Ernten einer jeder der Stangen zur Verfügung zu stellen. Bei ganz besonders hoher Dichte erntereifer Spargelstangen kann das Fahrzeug 1 auch veranlasst werden, stehen zu bleiben, um den Gelenkarmrobotern 6 genügend Zeit zu geben, diese Stangen abzuernten. Wenn nur eine kleine Menge erntereifer Spargelstangen erfasst wird, wird die Geschwindigkeit des Fahrzeuges 1 vergrößert.

Es besteht die Möglichkeit, ein Fahrzeug einzusetzen, das nur mit einem Gelenkarmroboter 6 und daran angebrachten Entnahmemitteln 5 versehen ist. Dieser Gelenkarmroboter 6 mit den daran angebrachten Entnahmemitteln 5 kann dann nur zwei Reihen von Spargelpflanzen gleichzeitig abernten.

## Patentansprüche

1. Verfahren zum Ernten von Spargel mit einer Vorrichtung zum Ernten von Spargel, umfassend
- ein Fahrzeug (1), das über einen Boden fahren kann, in dem Spargel angepflanzt ist;
- Mittel zum Erkennen einer einzelnen Spargelstange, die in einem zur Ernte geeigneten Zustand ist;
- Entnahmemittel (5) zum Entnehmen einzelner Spargelstangen aus dem Boden;
- Steuerungsmittel zur Steuerung der Entnahmemittel (5);
wobei das Fahrzeug (1) während der Entnahme einer Spargelstange nicht anhält, **dadurch gekennzeichnet, dass** die Steuermittel aus von den Mitteln zum Erkennen ermittelten Daten die Geometrie oder Topologie des Bodens berechnen und so auch die Entnahmemittel (5) gezielt zu der Position der zu erntenden Spargelstange führen können.

2. Verfahren nach Anspruch 1, **dadurch gekennzeichnet, dass** die Mittel zum Erkennen einer einzelnen Spargelstange die zu erntende Spargelstange nicht erfassen oder nicht erfassen müssen, während diese entnommen wird.

3. Verfahren nach einem der Ansprüche 1 oder 2, **dadurch gekennzeichnet, dass** das Fahrzeug (1) während der Entnahme einer Spargelstange mit weitgehend gleichmäßiger Geschwindigkeit weiter fährt.

4. Verfahren nach einem der Ansprüche 1 bis 3, **dadurch gekennzeichnet, dass** das Fahrzeug (1) während der Entnahme einer Spargelstange weitgehend unter Beibehaltung seiner Fahrtrichtung weiter fährt.

## Claims

1. Process for harvesting asparagus with an apparatus for harvesting asparagus, comprising
- a vehicle (1) which can move over the ground in which asparagus is planted;
- means for identifying an individual asparagus stalk which is in a state suitable for harvesting;
- removal means (5) for removing individual asparagus stalks from the ground;
- control means for controlling the removal means (5);
wherein the vehicle (1) does not stop during the removal of an asparagus stalk, **characterized in that** the control means can calculate the geometry or topology of the ground from data determined by the identifying means and can thus also guide the removal means (5) in a targeted manner to the position of the asparagus stalk which is to be harvested.

2. Process according to Claim 1, **characterized in that** the means for identifying an individual asparagus stalk do not detect or do not have to detect the asparagus stalk which is to be harvested while said asparagus stalk is being removed.

3. Process according to either of Claims 1 and 2, **characterized in that**, during the removal of an asparagus stalk, the vehicle (1) continues to move at a substantially uniform speed.

4. Process according to one of Claims 1 to 3, **characterized in that**, during the removal of an asparagus stalk, the vehicle (1) continues to move with the direction of travel thereof being substantially maintained.

## Revendications

1. Procédé pour récolter des asperges, avec un dispositif pour récolter des asperges, comprenant
- un véhicule (1), qui peut se déplacer sur un sol dans lequel sont plantées des asperges ;
- des moyens pour reconnaître une tige d'asperge individuelle, qui est dans un état prêt à la récolte ;
- des moyens de cueillette (5) pour cueillir des tiges d'asperges individuelles dans le sol ;
- des moyens de commande pour commander les moyens de cueillette (5) ;
le véhicule (1) ne s'arrêtant pas au cours de la cueillette d'une tige d'asperge, **caractérisé en ce que** les moyens de commande calculent, à partir de données détectées par les moyens de reconnaissance, la géométrie ou la topologie du sol et peuvent ainsi amener les moyens de cueillette (5) de manière ciblée dans la position de la tige d'asperge à récolter.

2. Procédé selon la revendication 1, **caractérisé en ce que** les moyens pour reconnaître une tige d'asperge individuelle ne détectent pas ou ne doivent pas détecter la tige d'asperge à récolter pendant que celle-ci est cueillie.

3. Procédé selon l'une quelconque des revendications 1 ou 2, **caractérisé en ce que** le véhicule (1) continue d'avancer à une vitesse essentiellement uniforme pendant la cueillette d'une tige d'asperge.

4. Procédé selon l'une quelconque des revendications 1 à 3, **caractérisé en ce que** le véhicule (1) continue d'avancer en conservant essentiellement sa direction de conduite pendant la cueillette d'une tige d'asperge.
